# EUROPÄISCHE PATENTANMELDUNG

(11) **EP 2 511 087 A2**
(43) Veröffentlichungstag der Anmeldung: **17.10.2012**
(21) Anmeldenummer: 12163724.3
(22) Anmeldetag: 11.04.2012
(51) Int. Cl.: B29L 31/48, B29C 44/08, B29C 44/12

(54) **Verfahren zur Herstellung eines Werkstückes**

(30) Priorität: 05.07.2011 DE 102011078668; 22.09.2011 DE 202011106011 U; 13.04.2011 DE 202011005247 U; 13.04.2011 DE 202011005245 U
(71) Anmelder: Ruch Novaplast GmbH & Co. KG, 77704 Oberkirch (DE)
(72) Erfinder: Doll, Thomas, 77704 Oberkirch (DE); Zeifang, Roland, 77790 Steinach (DE); Mantwill, Winfried, 77656 Offenburg-Weier (DE)
(74) Vertreter: BRP Renaud & Partner

(57) **Zusammenfassung**

Ein Werkstück mit einer Hartschale sowie einer damit stoffschlüssig verbundenen Polsterschicht wird hergestellt, indem zunächst die Hartschale in einer Form mit entsprechender Kavität hergestellt wird. Danach wird in der Form eine weitere Kavität eingestellt, wobei die Hartschale eine Matrize oder Patrize bildet. Diese weitere Kavität wird ausgeschäumt.

## Beschreibung

Die Erfindung bezieht sich auf ein Verfahren zur Herstellung eines Werkstückes mit zumindest einer Hartschicht bzw. Hartschale sowie einer damit stoffschlüssig verbundenen, vergleichsweise weichen Polsterschicht.

Für viele Einsatzzwecke sind Artikel notwendig, die einerseits eine formstabile Schale und andererseits eine damit verbundene Polsterschicht besitzen. Beispielhaft kann auf Schutzhelme für Rad- und Motorradfahrer oder auf gepolsterte Sitzschalen verwiesen werden.

Grundsätzlich besteht die Möglichkeit, die Hartschale und das zugehörige Polsterteil getrennt herzustellen und nachfolgend mit herkömmlichen Fügeverfahren zu verbinden. Der damit verbundene Aufwand ist jedoch unerfreulich hoch. Außerdem ist die Festigkeit der Verbindung oftmals ungenügend.

Grundsätzlich sind auch Kleb- oder Schweißverbindungen zwischen der Polsterschicht und der Hartschale möglich. Hier kann zwar eine hinreichend belastbare und dauerhafte Verbindung erzielt werden, jedoch ist der Herstellungsaufwand unerwünscht hoch.

Aus der EP 1 299 219 B1 ist eine Verfahren zur Herstellung von Formteilen bekannt, die eine aus Partikelschaum erzeugte Polsterschicht und eine harte Deckschicht aufweisen, wobei die Herstellung in einer Formanordnung durchgeführt wird. Dabei wird in der Formanordnung zunächst eine Kavität für den Schaumstoffbereich des herzustellenden Formteiles eingestellt und nachfolgend mit Partikelschaum ausgeschäumt. Danach wird in der Formanordnung eine weitere Kavität zur Ausformung der harten Deckschicht hergestellt, wobei das zuvor geformte Schaumstoffteil in der Formanordnung als Matrize oder Patrize verbleibt. Sodann erfolgt in dieser Kavität ein Spritzgießprozess für die harte Deckschicht.

Bei diesem Herstellungsprozess ist also vorgesehen, innerhalb einer Formanordnung an ein zuvor geformtes Schaumstoffteil eine Deckschicht anzuformen.

Versuche haben gezeigt, dass dieses Verfahren weitestgehend unpraktikabel ist. Denn die Qualität der Polsterschicht des fertigen Formteiles ist regelmäßig ungenügend.

Hier setzt die Erfindung an. Die zu lösende Aufgabe besteht im Wesentlichen darin, bei einem Formteil der eingangs angegebenen Art neben einer dauerhaft festen Verbindung zwischen Hartschale und Polsterschicht eine gute und reproduzierbare Qualität von Hartschale und Polsterschicht zu gewährleisten.

Diese Aufgabe wird erfindungsgemäß dadurch gelöst, dass zunächst die Hartschale bzw. -schicht in einer ersten Kavität geformt wird, und dass danach die Polsterschicht in einer zweiten Kavität geformt wird, welche zwischen der zuvor geformten und nunmehr als Matrize benutzten Hartschale bzw. -schicht und einer Patrize hergestellt wird.

Die Erfindung beruht auf dem allgemeinen Gedanken, als Begrenzungswand der für die Ausformung der Polsterschicht vorgesehenen Kavität die zuvor ausgeformte Hartschale bzw. -schicht einzusetzen. Auch wenn das Schaummaterial bei seiner Ausformung zunächst eine hohe und für das Material der Hartschale bzw. -schicht gegebenenfalls sogar zerstörerische Temperatur aufweisen sollte, bleibt dies bezüglich der Produktionsqualität des zu erzeugenden Formteiles unbedenklich, weil die Dichte des Schaummaterials im Vergleich zur Dichte des Materials der Hartschale bzw. -schicht vergleichsweise gering ist und dementsprechend der Wärmeeintrag vom Schaummaterial in das Material der Hartschale bzw. -schicht äußerst gering bleibt.

Dies bietet den Vorteil, dass für die Herstellung der Hartschale bzw. -schicht ohne Weiteres ein thermoplastisches Polymermaterial eingesetzt werden kann und beim Ausschäumen der zur Formung der Polsterschicht vorgesehenen Kavität eine innige und belastbare Verbindung zwischen Hartschale bzw. -schicht und Polsterschicht erzeugt wird.

Von dem aus der EP 1 299 219 B1 bekannten Verfahren unterscheidet sich das erfindungsgemäße Verfahren also vor allem darin, dass eine abweichende Aufeinanderfolge der Prozessschritte vorgesehen wird. Auf diese Weise wird sicher verhindert, dass bei der Herstellung der Hartschale bzw. -schicht ein zuvor erzeugter Schaumstoffteil kollabieren oder zerstört werden könnte.

Gemäß einer bevorzugten Ausführungsform der Erfindung kann die Hartschale bzw. -schicht in grundsätzlich bekannter Weise spritzgegossen werden, wobei die beim Spritzgussprozess eingesetzte Matrize oder Patrize der Gussform mit der darin bzw. daran zunächst verbleibenden Hartschale bzw. -schicht als Matrize bzw. Patrize der für die Ausformung des Schaummaterials zu erstellenden Kavität eingesetzt werden kann.

Mit der Erfindung lassen sich auch ohne Weiteres Formteile mit einer Schaumstoff- bzw. Polsterschicht zwischen zwei Hartschalen bzw. -schichten erzeugen. Hier können zunächst die beiden Hartschalen bzw. -schichten hergestellt werden, beispielsweise durch einen Spritzgussprozess. Danach werden diese beiden Schalen bzw. Schichten vorzugsweise zusammen mit den sie weiterhin tragenden Matrizen und Patrizen des vorangegangenen Spritzgussprozesses als Matrizen und Patrizen der nunmehr für die Ausformung des Schaumstoffes zu erstellenden Kavität eingesetzt, die dann in herkömmlicher Weise ausgeschäumt wird.

Im Übrigen wird hinsichtlich bevorzugter Merkmale der Erfindung auf die Ansprüche und die nachfolgende Erläuterung der Zeichnung verwiesen, anhand der das erfindungsgemäße Verfahren näher beschrieben wird.

Schutz wird nicht nur für angegebene oder dargestellte Merkmalskombinationen, sondern auch für prinzipiell beliebige Kombinationen der angegebenen oder dargestellten Einzelmerkmale beansprucht.

In der Zeichnung zeigt
- Fig. 1: eine schematisierte Darstellung der Herstellung eines Formteiles mit einer Hartschicht sowie einer damit stoffschlüssig verbundenen Polsterschicht,
- Fig. 2: einen gegenüber Fig. 1 abgewandelten Herstellungsprozess, bei dem ein Formteil mit besonders ausgeformter Polsterschicht hergestellt wird.

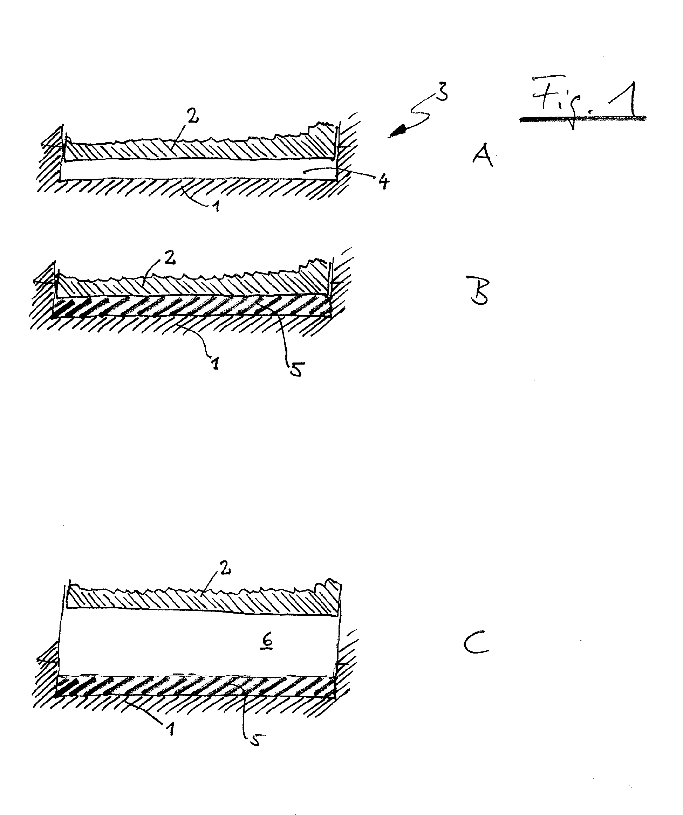

Gemäß dem Bild A der Fig. 1 wird zunächst zwischen einer Matrize 1 und einer Patrize 2 eines Formwerkzeuges 3 eine erste Kavität 4 hergestellt, die der gewünschten Form einer herzustellenden Hartschale bzw. -schicht entspricht. Gemäß dem Bild B wird dann diese Hartschale bzw. -schicht 5 in herkömmlicher Weise durch Spritzgießen erzeugt, indem in die Kavität 4 ein thermoplastisches Polymermaterial eingespritzt wird.

Nach hinreichender Aushärtung bzw. Verfestigung der Schale bzw. Schicht 5 wird die Patrize 2 von der Schale bzw. Schicht 5 abgelöst und derart eingestellt, dass zwischen der Patrize 2 und der weiterhin die Schale bzw. Schicht 5 tragenden Matrize 1 eine zweite Kavität 6 hergestellt wird. In einem nachfolgenden Prozessschritt wird dann diese Kavität 6 gemäß dem Bild C mit Partikelschaum ausgeschäumt, der sich dabei stoffschlüssig mit der Schale bzw. Schicht 5 verbindet. Im Ergebnis wird auf diese Weise ein Formteil mit einer Hartschale bzw. -schicht 5 und einer damit stoffschlüssig verbundenen Polsterschicht 7 hergestellt.

Um das Formteil 5, 7 bzw. die Hartschale bzw. -schicht 5 leichter aus dem Formwerkzeug heraustrennen bzw. von der Patrize 2 abtrennen zu können, können die Matrize 1 und die Patrize 2 in Segmente zerlegbar ausgebildet sein. Statt dessen ist es auch möglich, über Porösitäten in der Matrize 1 bzw. Patrize 2 ein gas- oder dampfförmiges Trennfluid einzupressen.

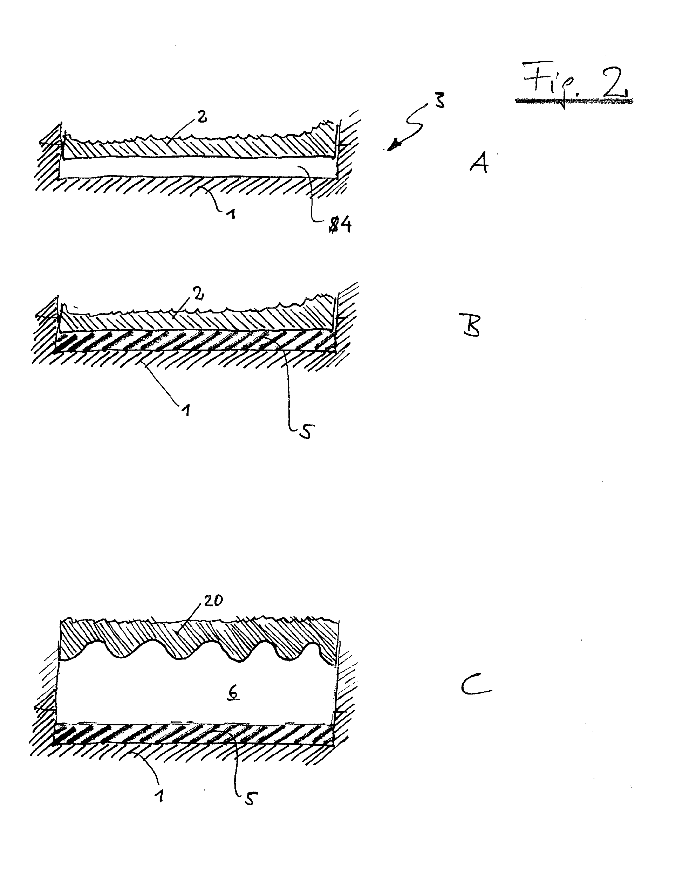

Der in Fig. 2 dargestellte Prozess unterscheidet sich von dem Herstellungsprozess der Fig. 1 im Wesentlichen nur dadurch, dass zur Herstellung der zur Ausformung des Schaumstoffes dienenden zweiten Kavität 6 eine Matrize 20 verwendet wird, deren Form von der für den Spritzgussprozess zur Herstellung der Hartschale bzw. -schicht 5 vorgesehenen Matrize 2 abweicht.

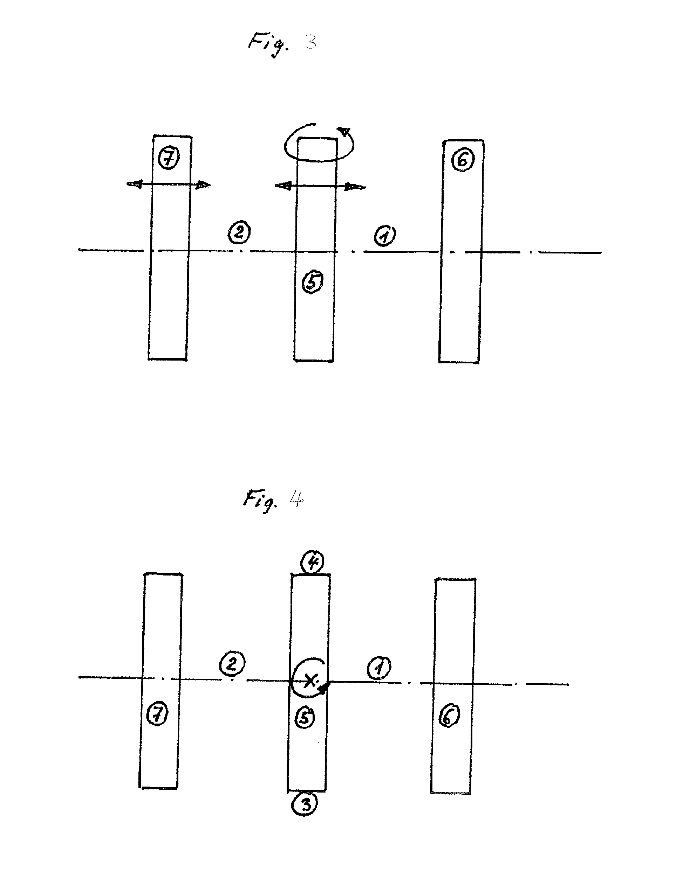

Nachfolgend werden noch zusätzliche Erläuterungen zu Vorrichtungen für die Durchführung des oben dargestellten Herstellungsverfahrens gegeben:
Aus dem Gebrauchsmuster Az. 202011004211.1 ist eine Wendeplattenmaschine bekannt, mit der Sprizgiess-Bauteile mittels maschinenintegrierter Fügetechnik zu einem Vollkörper mit Hohlraum verbunden werden. Dabei zeigt Fig. 3 schematisch die Schliessseite der Wendeplattenmaschine als Seitenansicht. Dabei ergibt sich der Werkzeugeinbauraum 1 durch die feste Formaufspannplatte 6 und die verschieb- und drehbare Mittelplatte 5 sowie der Werkzeugeinbauraum 2 durch die bewegliche Formaufspannplatte 7 und die verschieb- und drehbare Mittelplatte 5. Als weitere Erläuterung zeigt Fig. 4 eine schematische Draufsicht auf die Schliessseite der Wendeplattenmaschine, mit den aus Sicht der Werkzeugeinbauräume freien Positionen 3 und 4 der Wendeplatte.

Des Weiteren ist die Herstellung von Artikeln aus Partikelschaum auf dafür vorgesehenen Formteilautomaten bekannt, die mittels Dampfüberdruck zum fertigen Teil ausgeschäumt werden. Das Konstruktionsprinzip der Wendeplattenmaschine ermöglicht es, zusammen mit dem Formteilautomaten zur Partikelschaumherstellung, eine neue Anlage konstruktiv auszulegen, zur Herstellung von Sandwichbauteilen mit spritzgegossener Aussenschale und einem Kern aus Partikelschaum.

Der Erfindung liegt die Aufgabe zugrunde, die konstruktiven Merkmale einer Anlage aufzuzeigen, die inline Sandwich Bauteile mit einem Kern aus Partikelschaum produziert. Hierfür eignet sich eine Kombinationstechnologie, bestehend aus einer Wendeplatten-Spritzgiessmaschine zur Herstellung von spritzgegossenen Bauteilkörpern mit anschliessender Inline-Verbindung der Teilkörper zu einem Hohlkörperbauteil, sowie einem Formteil-Automaten zur Partikelschaumherstellung zur Inline-Fertigung des Kerns des Hohlkörpers aus Partikelschaum. Dabei ist die Kombinationstechnologie-Anlage konstruktiv derart ausgelegt, dass in mindestens einem der zwei Werkzeugeinbauräume 1 und 2 der Wendeplattenmaschine der Hohlkörper hergestellt wird, und in dem verbleibenden Werkzeugeinbauraum der Hohlkörper nach einer Drehbewegung der Wendeplatte mit Partikelschaum ausgeschäumt wird. Die Ausschäumapparatur ist dabei konstruktiv derart ausgelegt, dass sie den Hohlkörper innerhalb der Kavität im Werkzeugeinbauraum ausschäumt.

Insbesondere kann vorgesehen sein, dass die Wendeplatte 5 auch konstruktiv als Drehtisch mit vertikaler Achse zur Maschinenachse der Wendeplattenmaschine ausgestaltet ist.

Außerdem ist zweckmäßig, wenn Hohlkörper in beiden Werkzeugeinbauräumen 1 und 2 gefertigt werden und die Partikelschaum-Apparatur konstruktiv derart ausgelegt ist, dass die Hohlkörper an den Positionen 3 und 4 der Wendeplatte mit Partikelschaum zum fertigen Bauteil produziert werden.

Im Übrigen umfasst die Erfindung eine Kombinationstechnologie, bestehend aus einer Wendeplatten-Spritzgiessmaschine zur Herstellung von Bauteilkörpern mit spritzgegossener Aussenschicht sowie einem Formteilautomaten zur Inline-Herstellung der Innenschicht aus Partikelschaum sowie anschliessender Verbindung der Teilkörper zu einem Gesamtbauteil. Dabei ist die Kombinationstechnologie-Anlage konstruktiv derart ausgelegt, dass die Teilspritzkörper im Werkzeugeinbauraum der Wendeplattenmaschine geformt werden. Nach dem Öffnen der Schliesseinheit wird der um eine vertikale Achse bewegliche mittlere Formaufspannbereich um 90[deg.] gedreht. Die Konstruktion ist nun so ausgelegt, dass auf mindestens eine der quer zur Längsachse der Wendeplattenmaschine gedrehten Kavitäten, eine offene Formteileinrichtung zur Partikelschaumherstellung bewegt wird, und die Werkzeughälften verschliesst. Die Formteileinrichtung ist konstruktiv derart ausgebildet, dass Partikelschaum in den Hohlkörper eingegeben wird, Luft aus der Kammer abgesaugt wird und die Partikel mittels zugegebenen Dampfüberdrucks ausgeschäumt werden. Danach wird die Partikelschaum-Formteileinrichtung von den Werkzeughälften gelöst. Für bestimmte Werkzeugbereiche vorgesehene bewegliche Elements werden gezogen, und der mittlere Formaufspannbereich wird erneut um 90[deg.] gedreht. Danach fahren Oberflächenaktionselemente zwischen die offenen Werkzeughälften zur Aktivierung der zu verbindenden Spritzgiessteilkörper. Nach dem Ziehen der Aktivierungselemente wird der Formaufspannbereich der Wendeplattenmaschine geschlossen und das Bauteil gefügt. Danach erfolgt die Entformung.

Zweckmäßig ist die Wendeplattenmaschine konstruktiv derart ausgelegt, dass vor dem Spritzvorgang Textilverstärkungen eingelegt werden können.

Alle Vorrichtungen können konstruktiv derart ausgelegt sein, dass in einer ersten Sequenz der spritzgegossene Teilkörper im Werkzeug mit mindestens einer Kavität gefertigt wird. Nach dem Öffnen des Werkzeugs wird der/die Teilkörper mit einem Handling entnommen und in den Formteilautomaten zur Partikelschaumherstellung umgesetzt. Die konstruktive Ausgestaltung des Formteilautomaten sowie die dazugehörigen Werkzeuge sind derart, dass das Bauteil durch inline Herstellung des zweiten Partikelschaum-Teilkörpers als Fertigbauteil nach der Entformung vorliegt.

## Patentansprüche

1. Verfahren zur Herstellung von Formteilen, wie z.B. Schutzhelmen und der gleichen, mit zumindest einer Hartschicht bzw. Hartschale sowie einer damit stoffschlüssig verbundenen vergleichsweise weichen Polsterschicht,
**dadurch gekennzeichnet,**
**dass** die Hartschale bzw. -schicht (5) in einer ersten Kavität (4) geformt wird, und dass danach die Polsterschicht (7) in einer zweiten Kavität (6) geformt wird, welche zwischen der zuvor geformten und nunmehr als Matrize benutzten Hartschale bzw. -schicht (5) und einer Patrize (2,20) hergestellt wird.

2. Verfahren nach Anspruch 1,
**dadurch gekennzeichnet,**
**dass** die Hartschale bzw. -schicht (5) bei Ausformung der Polsterschicht (7) an einer für die Ausformung der Hartschale bzw. -schicht (5) verwendeten Matrize (1) verbleibt.

3. Verfahren nach Anspruch 1 oder 2,
**dadurch gekennzeichnet,**
**dass** die Hartschale bzw. -schicht (5) mittels eines Spritzgussprozesses erzeugt wird.

4. Verfahren nach Anspruch 3,
**dadurch gekennzeichnet,**
**dass** die Hartschale bzw. -schicht (5) aus einem thermoplastischen Polymermaterial spritzgegossen wird.

5. Verfahren nach einem der Ansprüche 1 bis 4,
**dadurch gekennzeichnet,**
**dass** zur Erzeugung der Polsterschicht (7) in die zweite Kavität (6) Partikelschaumstoff eingeschäumt wird.

6. Verfahren nach einem der Ansprüche 1 bis 5,
**dadurch gekennzeichnet,**
**dass** der Partikelschaumstoff mit einer Temperatur nahe dem Schmelzpunkt des Materials der Hartschale bzw. -schicht (5) eingeschäumt wird.

7. Verfahren nach einem der Ansprüche 1 bis 6,
**dadurch gekennzeichnet,**
**dass** ein Formteil mit einer zwischen zwei Hartschalen bzw. -schichten (5) angeordneten Polsterschicht hergestellt wird, indem die beiden zuvor hergestellten Schalen bzw. Schichten (5) als Matrize und Patrize an einer nachfolgend mit Polstermaterial ausgeschäumten Kavität eingesetzt werden.

8. Verfahren nach Anspruch 7,
**dadurch gekennzeichnet,**
**dass** die Hartschalen bzw. -schichten (5) von den jeweils für ihre Ausformung verwendeten Matrizen bzw. Patrizen getragen werden.
